# NEUE EUROPÄISCHE PATENTSCHRIFT

(11) **EP 1 037 739 B2**
(45) Veröffentlichungstag und Bekanntmachung des Hinweises auf die Entscheidung über den Einspruch: **12.03.2008**
(45) Hinweis auf die Patenterteilung: 15.10.2003
(21) Anmeldenummer: 99944461.5
(22) Anmeldetag: 20.08.1999
(51) Int. Cl.: B29C 67/00, B29C 39/42, B22F 3/105

(54) **VORRICHTUNG ZUM HERSTELLEN EINES DREIDIMENSIONALEN OBJEKTES, INSBESONDERE LASER-SINTERMASCHINE**
DEVICE FOR PRODUCING A THREE-DIMENSIONAL OBJECT, ESPECIALLY A LASER SINTERING MACHINE
DISPOSITIF PERMETTANT DE FABRIQUER UN OBJET TRIDIMENSIONNEL, EN PARTICULIER MACHINE DE FRITTAGE AU LASER

(30) Priorität: 09.10.1998 DE 19846478
(43) Veröffentlichungstag der Anmeldung: 27.09.2000
(73) Patentinhaber: EOS GmbH Electro Optical Systems, 82152 Krailling (DE)
(72) Erfinder: HOFMANN, Robert, D-96215 Lichtenfels (DE); TÜRCK, Harald, D-80689 München (DE); MATTES, Thomas, D-82110 Germering (DE)
(74) Vertreter: Hofer, Dorothea
(86) Internationale Anmeldenummer: PCT/EP1999/006130
(87) Internationale Veröffentlichungsnummer: WO 2000/021736

(56) Entgegenhaltungen:
- EP-A- 0 542 729
- WO-A-96/29192
- US-A- 5 730 925
- Design of a selective laser sintering machine intended for academic research, Paul Frederic Forderhase B.S., thesis for the degree of Master of Science, University of Texas at Austin, May 1998
- Design of a beakout System for selective laser sintered parts created by the academic test bed Jerry Don Jackson, B.S.M.E., thesis for the degree of Master of Science in Engineering, University of Texas at Austin, Max 1990

## Beschreibung

Die Erfindung betrifft eine Vorrichtung zum Herstellen eines dreidimensionalen Objektes, insbesondere eine Laser-Sintermaschine, und davon insbesondere eine Kunststoff-Laser-Sintermaschine mit den weiteren Merkmalen des Oberbegriffs von Patentanspruch 1 bzw. Patentanspruch 5.

Bekannte Laser-Sintermaschinen weisen ein Maschinengehäuse auf, in welchem ein Sinter-Bauraum oder Prozeßraum angeordnet ist. Im oberen Bereich dieses Bauraumes befindet sich die Ausgangsoptik eines Sinterlasers in Form eines Scanners. Der Scanner bildet das optische System zum Ablenken des Laserstrahls, der die zum Sintern des Sintermaterials (Thermoplastpulvers) erforderliche Energie liefert. Unter dem optischen System befindet sich eine höhenverfahrbare Werkstückplattform, über der eine Material zuführungseinrichtung mit einem Beschichter vorgesehen ist, der zur Zuführung von pulverartigem Sintermaterial aus einem Vorratsbehälter in dem Prozeßbereich über der Werkstückplattform dient.

Bei den Laser-Sintermaschinen nach dem Stand der Technik wird im Innenbereich der höhenverfahrbaren Werkstückplattform das Bauteil schichtweise aufgebaut. Um aber das Thermoplastpulver, das nicht belichtet und damit nicht gesintert wird, am Herunterfallen von der Werkstückplattform zu hindern, wird im Randbereich der Plattform im wesentlichen gleichzeitig ein Rand aufgebaut, dh. gesintert, der als Begrenzung der Werkstückplattform dient.

Diese Vorgehensweise ist in mehrerer Hinsicht mit Nachteilen verbunden.

Der Aufbau des Randes auf der Werkstückplattform bedarf zusätzlicher Belichtungszeit und erfordert außerdem zusätzliches, und nicht mehr weiterverwendbares Thermoplastpulver.

Besonders nachteilig ist zudem, daß bei einem Baufehler im Randbereich keine ausreichend stabile kastenartige Begrenzungsstruktur gebildet wird, was bereits vor oder spätestens beim Entnehmen des Bauteils von der höhenverfahrbaren Werkstückplattform zu Verformungen und damit zu Ausschuß führen kann.

Darüber hinaus führen Randbrüche oder Randschäden beim Entnehmen der Werkstückplattform aus der Laser-Sintertmaschine dazu, daß Pulver in den unteren Bereich der Laser-Sintermaschine fällt, diesen Bereich verschmutzt und damit zusätzliche Serviceleistungen und Standzeiten der Laser-Sintermaschine verursacht.

Dazu kommt als weiterer gravierender Nachteil, daß das gesinterte Bauteil sowie die Berandung nach dem eigentlichen Herstellungsprozeß noch über einen gewissen Zeitraum in der Laser-Sintermaschine zu verbleiben hat, um einen solchen Aushärtungs- und Abkühlungsgrad zu erreichen, daß Verformungen des Randes und des Bauteils beim Entnehmen nicht mehr vorkommen können. Hierbei gilt als Faustregel, daß bei einer Bauzeit von 20 Std. auch eine Abkühlzeit von etwa 20 Std. für den erstellten Rand und das Bauteil erforderlich sind, so daß Laser-Sintermaschinen nach dem Stand der Technik relativ hohe Standzeiten haben.

Ferner ist aus der US-A-5,730,925 eine Vorrichtung zum Herstellen eines dreidimensionalen Objektes durch aufeinanderfolgendes schichtweises Verfestigen eines verfestigbaren Materials an dem Querschnitt des Objektes entsprechenden Stellen mit seinem in einem Maschinengehäuse vorgesehenen Bauraum offenbart. In dem Bauraum ist ein Behälter einsetzbar, der einen Begrenzungsrahmen für das Material bildet. In dem Behälter ist eine Werkstückplattform integriert, wobei die werkstückplattform auf einer in dem Behälter angeordneten Trägervorrichtung befestigbar ist.

Ferner ist aus der WO-A-96 29192 eine Vorrichtung zum Herstellen eines dreidimensionalen Objektes durch aufeinanderfolgendes Verfestigen von Schichten eines mittels elektromagnetischer Strahlung verfestigbaren Materials an den dem jeweiligen Querschnitt des Objektes entsprechenden Stellen offenbart. Es ist eine höhenverstellbare Unterlage vorgesehen, auf der zu verfestigendes Material aufgebracht wird. Die Unterlage wird beheizt, so daß die erste aufgebrachte Schicht durch Wärmeeinwirkung verfestigt wird. Auf diese Weise wird eine feste Bodenschicht gebildet. Die Unterlage wird mittels einer Höheneinstellvorrichtung schrittweise pro aufgetragener Schicht abgesenkt. Am Außenumfang der Unterlage ist eine Heizspirale vorgesehen, die dafür sorgt, daß in jeder Schicht ein Außenumfang der Schicht verfestigt wird. Somit wird ein Behälterrand kontinuierlich aus übereinanderliegenden Bereichen der an der Heizspirale angrenzenden Schicht verfestigt und erzeugt. Die so gebildete Behälterwand verhindert beim Absenken der Unterlage ein Austreten des nicht verfestigten Materials. Nach der Herstellung des Objektes kann der so erzeugte Behälter von der Unterlage abgenommen werden und zum Abkühlen an einen separaten Ort gebracht werden.

In der Veröffentlichung "Design of a selective laser sintering machine intended for academic research" von Paul Fredric Forderhase, University of Texas at Austin, Mai 1989 wird eine Vorrichtung zum Herstellen eines dreidimensionalen Objektes offenbart, bei der ein Baukolben eines Bauteil-Moduls, in dem ein dreidimensionales Objekt aufgebaut wird, mittels einer Verbindungshülse mit einem Antriebsschaft verbunden wird. Dadurch wird ermöglicht, dass das Bauteil-Modul entfernt und ersetzt werden kann.

Der Erfindung liegt die Aufgabe zugrunde, eine Vorrichtung zum Herstellen eines dreidimensionalen Objektes und insbesondere eine Laser-Sintermaschine mit den Merkmalen des Oberbegriffs des Patentanspruchs 1 bzw. des Patentanspruchs 5 derart auszubilden, dass Energie- und Materialaufwand gesenkt und die Standzeiten zwischen zwei Bauprozessen erheblich verkürzt werden können.

Diese Aufgabe wird durch die kennzeichnenden Merkmale des Patentanspruchs 1 bzw. des Patentanspruchs 5 gelöst. Vorteilhafte Weiterbildungen ergeben sich aus den Unteransprüchen.

Als Kern der Erfindung wird es zunächst angesehen, in dem Sinter-Bauraum einen einen Begrenzungsrahmen bildenden Wechselbehälter einzusetzen, in welchen die Werkstückplattform als Boden integriert ist und in welchem eine Trägervorrichtung angeordnet ist, auf der sich die Werkstückplattform beim Betrieb der Laser-Sintermaschine abstützt.

Der neuartige in den Sinter-Bauraum einsetzbare Wechselbehälter besteht damit im wesentlichen aus zwei Kernbestandteilen, nämlich einmal aus einem schachtartigen Außenbereich, der den Begrenzungsrahmen bildet und der üblichen Werkstückplattform, die in diesem schachtartigen Bereich höhenverfahrbar integriert ist.

In vorteilhafter Weise ist die Trägervorrichtung im Bereich der Maschinengehäuserückwand geführt.

Beim schichtweisen Aufbau des Bauteils wird sukzessive, d.h. Schichthöhe für Schichthöhe, der Behälterboden innerhalb des Begrenzungsrahmens abgesenkt und der über der Werkstück-plattform liegende Bereich immer wieder neu mit pulverartigem Sintermaterial ausgefüllt, was in herkömmlicherweise durch den Beschichter vorgenommen wird.

In vorteilhafter Weise muß aber randseitig kein Rand mit aufgebaut werden. Es reicht völlig aus, wenn nur das eigentliche Werkstück gesintert wird, das innerhalb des stabilen Wechselbehälters und dem darin einliegenden nicht gesinterten Sintermaterial verformungsgeschützt gelagert ist.

Sobald die letzte Schicht des Bauteils gesintert ist, kann über die Trägervorrichtung die Werkstückplattform in einen unteren Bereich abgesenkt werden, über Verriegelungselemente, beispielsweise Steckschieber, die in miteinander fluchtende Bohrungen zwischen den Wandungen des Wechselbehälters und der Werkstückplattform eingeschoben werden können, wird der Behälterboden mit den Behälterseitenwandungen fest verbunden. Dieser Verbund kann dann von der Trägervorrichtung gelöst und abgehoben und aus dem Bauraum entnommen werden. Dies kann problemlos in heißem Zustand geschehen. Die Auskühlung des Behälters, des darin befindlichen Bauteils und des Sintermaterials geschieht außerhalb der Sintermaschine.

Unmittelbar nach dem Entnehmen des Wechselbehälters kann in die Sintermaschine ein neuer Wechselbehälter eingesetzt werden, sein Boden mit der Trägervorrichtung verbunden und nachfolgend von den Seitenwandungen des Wechselbehälters entriegelt werden. Die Sintermaschine steht nach einer Umrüstzeit von etwa 15 - 20 min wieder für den nächsten Laser-Sintereinsatz zur Verfügung.

Die Erfindung wirkt sich damit in mehrfacher Hinsicht vorteilhaft auf den Betrieb einer solchen Sintermaschine aus. Zum einen können Baufehler im Randbereich nicht dazu führen, daß das eigentliche Bauteil Ausschuß wird. Abkühlzeiten des Bauteils bzw. des dieses umgebenden Materials sind aus der Sintermaschine herausverlagert.

Die Sintermaschine steht sehr schnell wieder für neuen Einsatz zur Verfügung. Außerdem wird Sintermaterial und Energie eingespart.

Der Wechselbehälter hat in Draufsicht vorteilhafterweise einen im wesentlichen quadratischen oder rechteckigen Querschnitt und umfaßt vier zueinander im wesentlichen rechtwinklig angeordneten Seitenwandungen. Innerhalb dieser Seitenwandungen ist die Werkstückplattform höhenverschiebbar geführt.

In vorteilhafter Weise ist die Werkstückplattform durch zwei parallel mit Abstand zueinander angeordnete Böden gebildet, wobei der obere Boden den Werkstückträger bildet und der untere Boden auf der Stützvorrichtung aufliegt.

Grundsätzlich ist es möglich, die Trägervorrichtung von unten in den Schacht der Behälterseitenwandungen eingreifen zu lassen oder auch als festen Bestandteil in den Wechselbehälter zu integrieren. Um stabile Verhältnisse bei Ausnutzung einer in die Maschine fest eingebauten Trägervorrichtung zu schaffen, ist es vorteilhaft, wenn die hintere Behälterwand des Wechselbehälters in Verschieberichtung, d.h. von unten nach oben verlaufende Eingriffsausnehmungen aufweist, durch die eine im Rückwandbereich des Bauraumes höhenverfahrbar geführte Trägervorrichtung mit im wesentlichen horizontal abstehenden Tragarmen hindurchgreifen kann. Es sind dabei Mittel vorgesehen, durch welche die Eingriffsausnehmungen im Bereich oberhalb der Werkstückplattform pulverdicht abgedeckt sind.

Die Lösung, bei der die Trägervorrichtung zum Unterstützen der Werkstückplattform über Tragarme durch eine der Seitenwände des Wechselbehälters in den Innenraum des Wechselbehälters eingreift hat gegenüber einer Lösung, bei der ein Tragarm von unten in den Wechselbehälter zum Unterstützen der Werkstück-plattform eingreift, den Vorteil, daß Platz, der für die Trägervorrichtung unterhalb des Wechselbehälters reserviert werden müßte, gespart werden kann und als Bauraum zum Bauen größerer Objekte verwendet werden kann. Die Lösung, bei der die Tragarme oder ein Tragarm seitlich in die Wechselbehälterwand eingreifen, erfordert jedoch immer eine Abdichtung der Eingriffsausnehmung für einen Tragarm oberhalb der Werkstückplattform, damit kein Pulver herausfallen kann.

Vorteilhafterweise geschieht dies in einer ersten Ausführungsform der Erfindung durch eine Vorrichtung zum Abdichten in Form eines Rollos, der an der Oberkante der Wechselbehälterrückwand befestigt ist und sich beim Absenken der Werkstückplattform auf die Innenseite der Behälterwandung anlegt und die Eingriffsausnehmungen überdeckt.

Um eine ausreichende Sinterpulverdichtigkeit zu gewährleisten, sind neben den Eingriffsausnehmungen mit dem Stahlrollo zusammenwirkende Haltemagnetelemente angeordnet. Der Stahlrollo schmiegt sich durch die Haltemagnetelemente sehr innig an die Innenseite der rückwärtigen Behälterwandung an, so daß kein oder nur sehr wenig Pulver in den unteren Maschinenbereich fallen kann.

Vorteilhafterweise ist der Rollo über eine Umlenkrolle geführt, deren hintere Kante mit der Innenfläche der hinteren Seitenwand fluchtet. Das Pulverdichtungselement kann durch eine Silikonplatte gebildet sein, deren Außenmaße an die Innenmaße der Wechselbehälterseitenwandungen angepaßt sind. In vorteilhafterweise ist die Werkstückplattform mit der Tragevorrichtung während des Prozesses verbunden.

In einer zweiten Ausführungsform der Erfindung weist der Wechselbehälter an seiner Rückwand eine mittig angeordnete und in Längsrichtung verlaufende schlitzförmige Ausnehmung auf, in die ein Tragarm zum Unterstützen der Werkstückplattform eingreift. Zum Abdichten dieser Eingriffsausnehmung im Bereich oberhalb der Werkstückplattform ist anstelle des Stahlrollos ein Band, bevorzugt aus Stahl, vorgesehen, welches an der Oberkante der Rückwand und am Boden des Wechselbehälters in einem Bereich im wesentlichen diagonal gegenüberliegend zu der Oberkante jeweils eingespannt ist. Das Stahlband wird entlang der Eingriffsausnehmung geführt und an der Unterseite der Werkstückplattform über Gleitzylinder gespannt verlaufend geführt. Das Stahlband hat zwischen seinen Einspannpunkten eine feste Länge und wird durch das Führen entlang der Unterseite der Werkstückplattform immer in der richtigen Länge an die Eingriffsausnehmung oberhalb der Werkstückplattform gepreßt. Die Ausführungsform mit dem Band hat gegenüber der Ausführungsform mit dem Stahlrollo den Vorteil, daß das Band kostengünstiger und bei Verschleiß oder Beschädigung leicht auszuwechseln ist. Das Band ist nahezu kraftfrei. Das zuvor beschriebene Rollo hingegen hat eine starke Feder zum Aufwickeln. Bei dem Band entfällt jedoch die Notwendigkeit, die Werkstückplattform in der unteren Stellung zu verriegeln. Die Reibung der Dichtung reicht, um die Werkstückplattform zu stabilisieren.

Im oberen Bereich des Behälters sind Halte- oder Einhängeelemente vorgesehen, um den Wechselvorgang auf nur wenige Handgriffe zu beschränken. Besonders vorteilhaft ist es, wenn der Wechselbehälter wie eine Schublade in den Prozeßraum einschiebbar ist, wozu Führungen im Bereich der Seitenwandungen des Prozeßraumes vorgesehen sind und der Wechselbehälter an seinem oberen Ende mit seitlich abstehenden Trägerwinkeln oder dgl. versehen ist, die auf den Führungen des Prozeßraumes aufliegen.

In einer alternativen Ausführungsform liegen die seitlich abstehenden Trägerwinkel, die an dem Wechselbehälter vorgesehen sind, nicht auf Führungen im Bereich der Seitenwandungen des Prozeßraumes auf, sondern werden über eine Klemmvorrichtung, die an einer im Prozeßraum vorgesehenen horizontal verlaufenden Arbeitsplatte mit einer Ausnehmung, die dem Umriß des Wechselbehälters entspricht, vorgesehen ist, von unten untergriffen, angehoben und gegen die Arbeitsplatte gepreßt.

Bevorzugt weist der Tragarm eine Kopplungsvorrichtung auf, die ein besonders einfaches An- und Abkoppeln an die bzw. von der Werkstückplattform ermöglicht.

Bevorzugt ist ferner ein Hubwagen vorgesehen, der in oder an den Bauraum gefahren werden kann und auf dem der Wechselbehälter transportiert werden kann.

Bei den Laser-Sintermaschinen nach dem Stand der Technik wird der gesamte untere Bauraum beheizt. Eine solche Bauraumbeheizung ist relativ träge und energieaufwendig. Durch eine Heizvorrichtung, die in den Wechselbehälter bzw. seinen Boden oder seine Wandungen integriert ist, kann die Heizung gezielt an die thermischen Bedürfnisse des Laser-Sinterprozesses angepaßt werden.

Die Erfindung ist anhand von Ausführungsbeispielen in den Zeichnungsfiguren näher erläutert. Diese zeigen:
- Fig. 1: Eine schematische Seitenschnittdarstellung einer Laser-Sintermaschine mit Wechselbehälter,
- Fig. 2: eine Schnittdarstellung wie Fig. 1, jedoch mit einem modifizierten Wechselbehälter,
- Fig. 3: eine Detailschnittdarstellung eines Wechselbehälters gemäß Fig. 1 mit Werkstückplattform in oberer Stellung,
- Fig. 4: eine Detaildarstellung gemäß Fig. 3 mit Werkstück plattform in abgesenkter, verriegelter Stellung,
- Fig. 5: eine perspektivische Ansicht einer Ausführungsform des Wechselbehälters,
- Fig. 6: eine perspektivische Ansicht einer Hub- und Klemmvorrichtung zum Festklemmen des Wechselbehälters in dem Bauraum,
- Fig. 7: eine schematische Querschnittsansicht des Wechselbehälters von Fig. 5 in eingebautem Zustand,
- Fig. 8a bis 8c: eine schematische Querschnittsdarstellung des Betriebs der Klemmvorrichtung von Fig. 6 mit der der Wechselbehälter angehoben und an einer Arbeitsplatte im Bauraum festgeklemmt wird in einer ersten (Fig. 8a), einer zweiten (Fig. 8b) und einer dritten (Fig. 8c) Stellung,
- Fig. 9: eine Ansicht von vorne auf eine Ausführungsform eines Tragarmes mit einer Kopplungsvorrichtung zum Ankoppeln an die Werkstückplattform in einer ersten Stellung gekoppelt, aber ohne Werkstückplattform,
- Fig. 10: eine perspektivische Ansicht von schräg oben auf die Ausführungsform des Tragarmes gemäß Fig. 9,
- Fig. 11: eine Ansicht von vorne des Tragarmes mit der Kopplungsvorrichtung von Fig. 9 in einer zweiten Stellung,
- Fig. 12: eine perspektivische Ansicht des Tragarmes mit der Kopplungsvorrichtung in der zweiten Stellung gemäß Fig. 11,
- Fig. 13: eine schematische Querschnittsdarstellung des Betriebes der Kopplungsvorrichtung von Fig. 9 bis Fig. 11 in Verbindung mit dem Wechselbehälter, und
- Fig. 14: eine vergrößerte Querschnittsansicht des Details X von Fig. 13.

Die in den Zeichnungsfiguren dargestellte Laser-Sintermaschine 1 weist ein Maschinengehäuse 2 auf, in dem ein Bauraum 3 untergebracht ist. Im oberen Bereich 4, des Bauraums 3 ist ein Scanner 5 eines Sinterlasers 6 angeordnet, um den Laserstrahl 7 abzulenken und auf die Werkstückplattform 8 bzw. darauf geschichtetes Sintermaterial 9 zu fokussieren, das schichtweise auf die Werkstückplattform 8 durch einen Beschichter 10 aufgetragen wird. Das Sintermaterial 9 wird dem Beschichter 10 aus einem nicht dargestellten Vorratsbehälter zugeführt.

Im unteren Bereich 11 des Bauraums 3 ist ein Wechselbehälter 12 eingesetzt, der sich aus Seitenwandungen 14 und der Werkstückplattform 8 zusammensetzt, die innerhalb der Seitenwandungen 14, d.h. innerhalb der durch diese gebildeten Schachtes nach oben und unten verfahrbar ist.

Um die Höhenverfahrbarkeit der Werkstückplattform 8 zu gewährleisten, ist eine Trägervorrichtung 20 vorgesehen, auf der sich die Werkstückplattform 8 beim Betrieb der Laser-Sintermaschine abstützt und auf welcher die Werkstückplattform 8 befestigt ist.

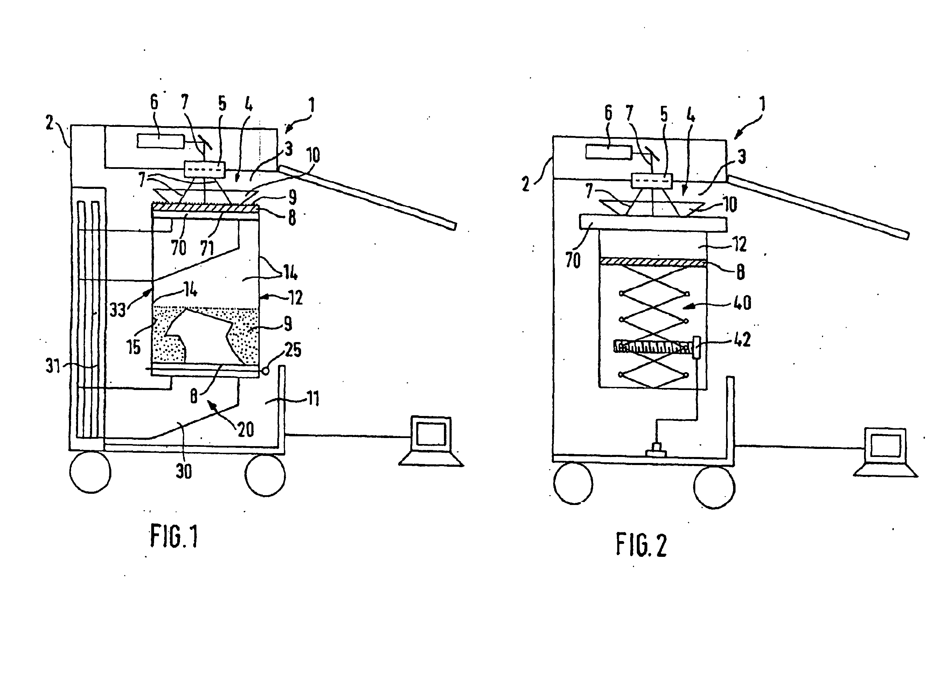

Bei dem in Fig. 1 dargestellten Ausführungsbeispiel befindet sich die Werkstückplattform in der obersten Stellung innerhalb des Wechselbehälters.

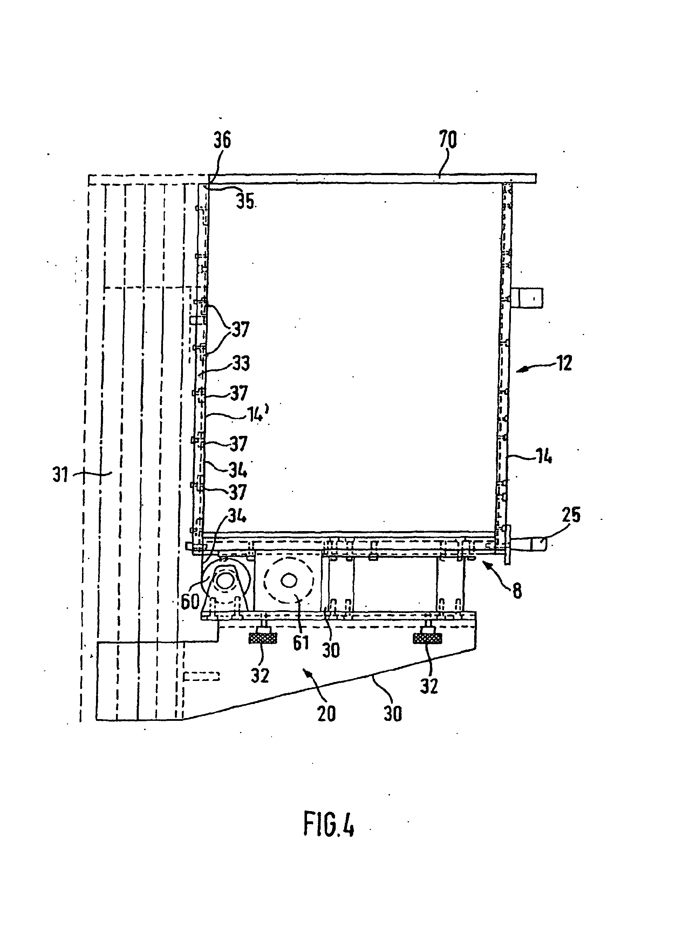

Bei dem in Fig. 4 dargestellten Ausführungsbeipiel, das eine Detailansicht einer Ausführungsform eines Wechselbehälters 12 zeigt, ist die Werkstückplattform 8 mit dem Seitenwandungen 14 des Wechselbehälters 12 in der unteren Entnahmestellung verrastet, in diesem Zustand kann der Wechselbehälter 12 zusammen mit der seinen Behälterboden bildenden Werkstückplattform 8 in verrastetem Zustand aus dem Bauraum 3 entnommen werden. Zur Verrastung zwischen den Seitenwandungen 14 des Wechselbehälters 12 und der Werkstückplattform 8 sind der Steckschieber 25 vorgesehen, die in miteinander fluchtenden Bohrungen in den Seitenwandungen 14 und im Wechselbehälter 12 eingeführt werden können. Dadurch bildet der Wechselbehälter 12 eine zusammenhängende Einheit, die von der Trägervorrichtung 20 abgehoben werden kann.

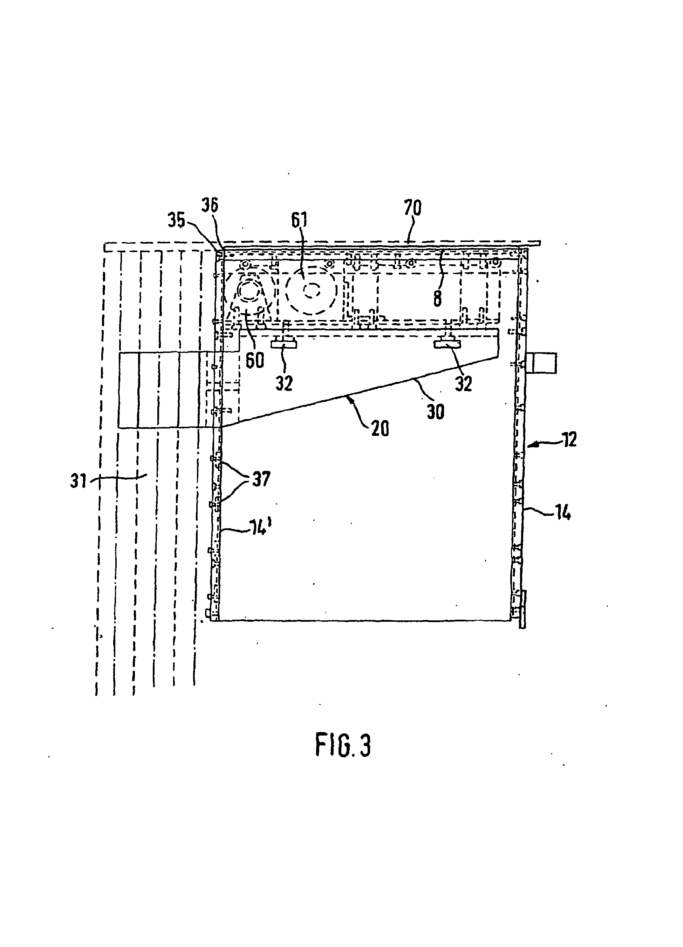

Bei dem in den Zeichnungsfiguren 1, 3 und 4 dargestellten Ausführungsbeispielen besteht die Trägervorrichtung aus Tragarmen 30, die in einer Führungsvorrichtung 31 im Bereich der Maschinengehäuserückseite angeordnet sind. Auf den Tragarmen 30 ist die Werkstückplattform 8 durch Schraubelemente 32 lösbar befestigt. Befindet sich gemäß Fig. 3 die Werkstückplattform 8 in einer oberen oder mittleren Lage des Wechselbehälters 12, so greifen die Tragarme 30 durch senkrecht verlaufende Eingriffsausnehmungen 33 hindurch, die in der hinteren Seitenwandung 14' angeordnet sind.

Alternativ ist es auch möglich, gemäß Fig. 2 die Trägervorrichtung 40 im unteren Bereich des Wechselbehälters 12 fest einzubauen um beispielsweise als Scherenheber 41 auszubilden, der über einen Spindeltrieb 42 stufenlos anhebbar und absenkbar ist. In einer weiteren alternativen Ausführungsform greift die Trägervorrichtung 40 von unten in den Wechselbehälter, und es ist eine Linearführung, bevorzugt eine teleskopierte Linearführung, zum Anheben und Absenken der Trägervorrichtung vorgesehen.

In diesem Falle kann der Wechselbehälter 12 ohne die Eingriffsausnehmungen 33 in der hinteren Seitenwandung 14' ausgeführt werden, da keine Elemente einer Trägervorrichtung durch die hintere Seitenwandungen 14' durchgreifen müssen.

Nachfolgend wird wieder auf die Zeichnungsfiguren 1, 3 und 4 Bezug genommen.

Um die Eingriffsausnehmungen 33 im Bereich oberhalb der Werkstückplattform 8 pulverdicht abzudecken, ist ein Rollo 34 vorgesehen, dessen oberes Ende 35 an der Oberkante 36 der hinteren Seitenwandung 14' befestigt ist. Der Rollo 34 ist ein Stahlrollo und besteht aus magnetisierbarem Material. Neben den Eingriffsausnehmungen 33 sind Magnetelemente 37 angeordnet durch welche der Rollo 34 sinterpulverdicht an die Innenseite der Seitenwandung 14' angezogen wird.

Die Werkstückplattform 8 wird durch zwei parallel mit Abstand zueinander angeordnete Böden gebildet, wobei der obere Boden den Werkstückträger bildet und der untere Boden oder ein entsprechendes bodenartiges Element auf der Stützvorrichtung 20 aufliegt. Zwischen den beiden Böden sind für den Rollo 34 eine Umlenkrolle 60 und eine federvorgespannte Aufrollvorrichtung 61 vorgesehen.

Zwischen den Innenseiten 15 der Seitenwandungen 14 des Wechselbehälters und den Außenkanten der Werkstückplattform 8 ist ein Pulverdichtungselement wirksam, das durch eine nicht näher dargestellte Silikonplatte gebildet wird, deren Außenmaße an die Innenmaße der Behälterwandungen angepaßt sind.

Der Wechselbehälter 12 ist in Führungen 70 des Maschinengehäuses 2 wie eine Schublade einschiebbar und weist dazu vom oberen Rand des Wechselbehälters 12 seitlich abstehende Trägerwinkel 71 auf, die auf den Führungen 70 des Maschinengehäuses 2 aufliegen.

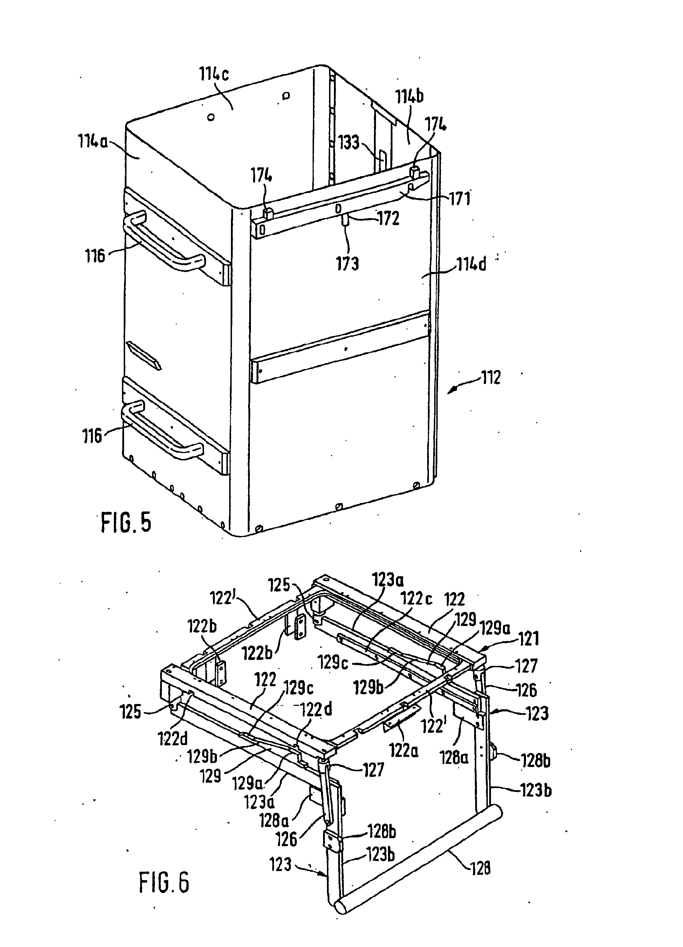

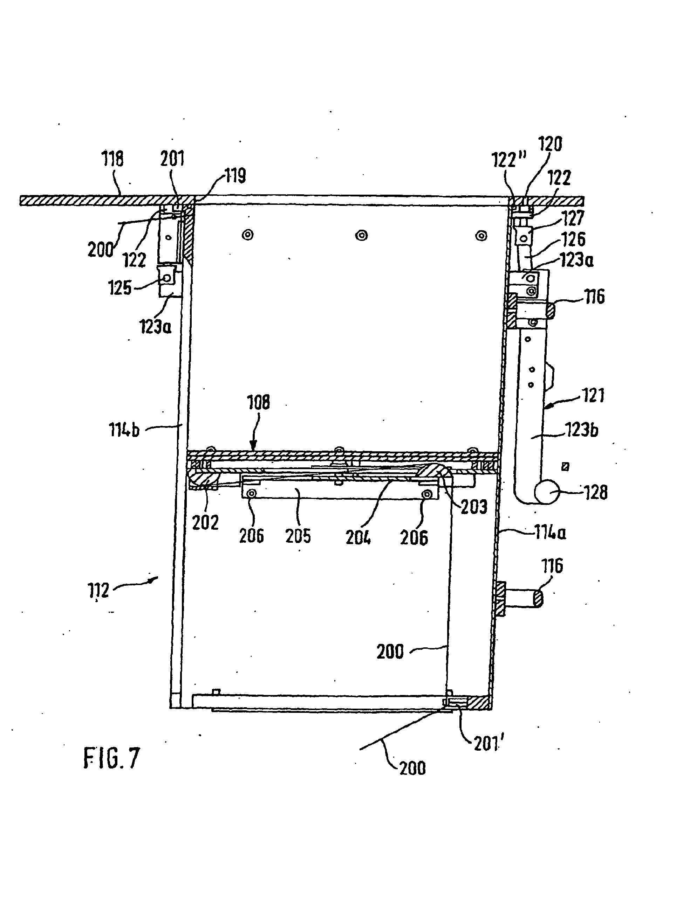

Eine weitere Ausführungsform eines Wechselbehälters 112 ist in Fig. 5 und Fig. 7 dargestellt. Der Wechselbehälter 112 ist bevorzugt, aber nicht notwendigerweise von quadratischem Querschnitt und weist vier Seitenwandungen 114a, 114b, 114c und 114d auf, die einen Schacht bilden, in dem, wie in Fig. 7 dargestellt ist, eine Werkstückplattform 108 höhenverfahrbar angeordnet ist. An der vorderen Seitenwandung 114a, die, wenn der Wechselbehälter 112 in die Maschine eingesetzt ist einer Einschuböffnung in den Bauraum zugewandt ist, weist der Wechselbehälter 112 zwei Handgriffe 116 auf, an denen der Wechselbehälter wie eine Schublade in die Maschine hineingeschoben bzw. herausgeholt werden kann. An den an die vordere Seitenwandung 114a angrenzenden Seitenwandungen 114c, 114d weist der Wechselbehälter jeweils in einem vorbestimmten Abstand von seinem oberen Rand seitlich abstehende Trägerleisten bzw. Trägerwinkel 171 auf. Jeder Trägerwinkel 171 weist an seiner Unterseite einen mittig angeordneten und vertikal nach unten herausstehenden Stift 172 mit abgerundetem freien Ende 173 und an seiner Oberseite zwei Anlagen 174 auf. An seiner der vorderen Seitenwandung 114a gegenüberliegenden rückwärtigen Seitenwandung 114b, die der hinteren Wand des den Bauraum begrenzenden Maschinengehäuses zugewandt ist, weist der Wechselbehälter 112 eine in Längsrichtung, d.h. in Verfahrrichtung der Werkstückplattform 108 verlaufende und im wesentlichen mittig angeordnete schlitzförmige Eingriffsausnehmung 133 zum Eingreifen für einen Tragarm der Tragvorrichtung auf. Die Eingriffsausnehmung 133 erstreckt sich bis an den unteren Rand des Wechselbehälters, damit es möglich ist, einen an einer Hebevorrichtung seitlich im Maschinengehäuse vorgesehenen Tragarm einzuführen.

Bei dieser Ausführungsform ist zwischen den Innenseiten der Seitenwandungen 114a, 114b, 114c des Wechselbehälters 112 und der Außenkante der Werkstückplattform 108 ein nichtdargestelltes Pulverdichtungselement vorgesehen, das eine Schicht oder eine Kombination mehrerer Schichten mit Abdichtwirkung aufweist, deren Außenmaße den Innenmaßen des Wechselbehälters im Querschnitt entsprechen, beispielsweise Gummi, Silikon und/oder Filz, und das mit der Unterseite der Werkstückplattform federnd, beispielsweise über Spiralfedern aus Stahl, und gegebenenfalls über eine Andruckleiste verbunden ist. Dadurch lassen sich Fertigungstoleranzen des Wechselbehälters, Positionier- und Ausrichtungsfehler ausgleichen.

Wie aus Fig. 7 ersichtlich ist, ist in dem Bauraum 3 eine Arbeitsplatte 118 vorgesehen, die eine Aussparung 119 aufweist, deren Umriß dem Querschnitt des Wechselbehälters 112 entspricht. An der Unterseite der Arbeitsplattform 118 ist eine in Fig. 6 separat dargestellte Hub- und Klemmvorrichtung 121 befestigt. Die Klemmvorrichtung weist einen im wesentlichen dem Umriß des Wechselbehälters entsprechenden quadratischen Rahmen mit zwei gegenüberliegenden Rahmenteilen 122 und diese verbindenden Verbindungsstreben 122' auf. Der Rahmen ist an der Unterseite der Arbeitsplatte 118 angrenzend an die Aussparung 119 beispielsweise über Schrauben 120 befestigt. An den Rahmenteilen 122 ist ein Kniehebelsystem bestehend aus jeweils einem Kniehebel 123 mit einem ersten Schenkel 123a und einem mit diesem drehbar verbundenen zweiten Schenkel 123b vorgesehen. Der erste Schenkel ist an seinem einen Ende über ein Gelenk 125 schwenkbar mit dem einen Ende des Rahmenteiles 122 verbunden und mit seinem anderen Ende drehbar mit dem zweiten Schenkel 123b verbunden. Der zweite Schenkel 123b ist über eine Verbindungsstange 126, die drehbar an dem zweiten Schenkel angelenkt ist, über ein Gelenk 127 mit dem anderen Ende des Rahmenteiles 122 verbunden. Die freien Enden der zweiten Schenkel 123b der beiden Kniehebel 123 sind miteinander über eine Griffstange 128 zum Betätigen der Klemmvorrichtung verbunden. Der erste Schenkel 123a des Kniehebels weist jeweils an seiner dem Rahmenteil 122 zugewandten Oberseite ein speziell geformtes Aufsatzteil 129 auf, welches einen ersten Abschnitt 129a mit einer Oberfläche, die parallel zu der Oberseite des ersten Schenkels 123a ausgerichtet ist, einen sich daran angrenzenden zweiten Abschnitt 12b, der eine gegen das Gelenk 125 hin abwärts geneigte Oberfläche aufweist, und einen daran angrenzenden dritten Abschnitt 129c auf, dessen Oberfläche wiederum parallel zur Oberfläche des Schenkels ausgerichtet ist. Die Klemmvorrichtung 121 ist an der Arbeitsplatte 118 in dem Bauraum 3 so befestigt, daß die Griffstange 128 zur Einschuböffnung der Maschine für den Wechselbehälter weist. Das Aufsatzteil 129 ist so an dem ersten Schenkel 123a befestigt, daß das freie Ende 173 des Stiftes 172 an dem Trägerwinkel 171 des Wechselbehälters 112 in verriegeltem Zustand auf dem dritten Abschnitt 129c zu liegen kommt. Weiterhin wird durch eine umlaufende Dichtung 122'' , die in einer in den Rahmenteilen 122 und den Verbindungsstreben 122' verlaufenden Nut liegt, eine pulverdichte Anbindung des Rahmens an die Arbeitsplatte 118 erreicht.

Ferner hat der Rahmen, gebildet aus 122 und 122', die Funktion, den Wechselbehälter zur Öffnung 119 in der Arbeitsplatte 118 zu zentrieren. Bei Anheben wird der Wechselbehälter in der einen Ebene durch einen Winkel 122a und Anlageflächen 122b, und seitlich durch Leisten 122c so geführt, daß er sauber und zuverlässig in die korrekte, durch die Teile 122, 122' vorgegebene Position gleitet. Zu diesem Zweck ist der Winkel 122a und die Anlageflächen 122b aus einem Gleitmaterial, wie beipielsweise PTFE, ausgebildet. Die vertikale Position des Wechselbehälters wird durch die in Fig. 5 gezeigten Anlagen 174 bestimmt, die paarweise auf den Trägerwinkeln 171 vorgesehen sind, und die auf einem entsprechenden Gegenstück in einer entsprechenden Aussparung 122d in den Rahmenteilen 122 aufliegen. Alle Auf- bzw. Anlagen sind aus gehärtetem Stahl gebildet, um eine einwandfreie Position über lange Zeit zu gewährleisten.

Die Bewegung des Kniehebelgelenks wird in der einen Richtung durch einen in Fig. 6 gezeigten Anschlag 128a begrenzt (verriegelter Wechselbehälter) und in der anderen Richtung durch einen Anschlag 128b.

Zum Abdichten der Eingriffsausnehmung 133 in einem Bereich oberhalb der Werkstückplattform 108 ist eine in Fig. 7 dargestellte Abdichtungsvorrichtung in Form eines flachen Bandes 200, bevorzugt aus Stahl, vorgesehen, dessen Breite größer ist als die Breite der Eingriffsausnehmung 133. Das Band 200 ist an einem ersten Einspannpunkt am oberen Rand der rückwärtigen Seitenwandung 114b des Wechselbehälters oberhalb der Eingriffsausnehmung 133 über eine Klemmbacke 201 fest eingespannt. Das Band 200 ist ferner an einem zweiten Einspannpunkt im wesentlichen diagonal gegenüberliegend zu dem ersten Einspannpunkt am unteren Rand der vorderen Seitenwandung 114a des Wechselbehälters über eine Klemmbacke 201 eingespannt. An der Unterseite der Werkstückplattform 108 sind in einem Abstand voneinander ein erster Halbzylinder 202 und ein zweiter Halbzylinder 203, beide bevorzugt aus einem Gleitmaterial, wie beipielsweise aus Kunststoff, vorgesehen, über die das Band 200 geführt ist. Der erste Halbzylinder 202 ist so angeordnet, daß er mit seiner gekrümmten Oberfläche von der Unterseite der Werkstückplattform 108 wegweist, während der zweite Halbzylinder 203 auf einer parallel zur Werkstückplattform 108 an deren Unterseite angeordneten Hilfskonstruktion 204 angeordnet ist und mit seiner gekrümmten Oberfläche zur Unterseite der Werkstückplattform 108, also in entgegengesetzter Richtung wie der erste Halbzylinder 202, zeigt. Dadurch wird das Band gespannt geführt. Der Krümmungsradius der Halbzylinder ist so gewählt, daß das darübergeführte Band 200 nicht geknickt wird und leicht darübergleiten kann. Das Band 200 ist von seinem ersten Einspannpunkt über die Eingriffsausnehmung 133 geführt und verläuft anschließend über die gekrümmte Oberfläche des ersten Halbzylinders 202 und von da über die gekrümmte Oberfläche des zweiten Halbzylinders 203, von wo aus es zu seinem zweiten Einspannpunkt geführt ist. Die Länge des Bandes 200 ist konstant und so bemessen, daß das Band straff geführt ist und aufgrund des Druckes der Werkstückplattform eng an der Eingriffsausnehmung 133 anliegt und diese abdichtet. Wie bei der ersten Ausführungsform können neben der Eingriffsausnehmung 133 Magnetelemente vorgesehen sein, durch die das Band, wenn dieses aus Stahl oder einem anderen magnetischen Material gebildet ist, zusätzlich an dem die Eingriffsausnehmung 133 begrenzenden Rand gehalten wird. Da das Stahlband 200 eine konstante Länge hat, ist kein Aufwickeln, wie bei dem Stahlrollo der ersten Ausführungsform nötig.

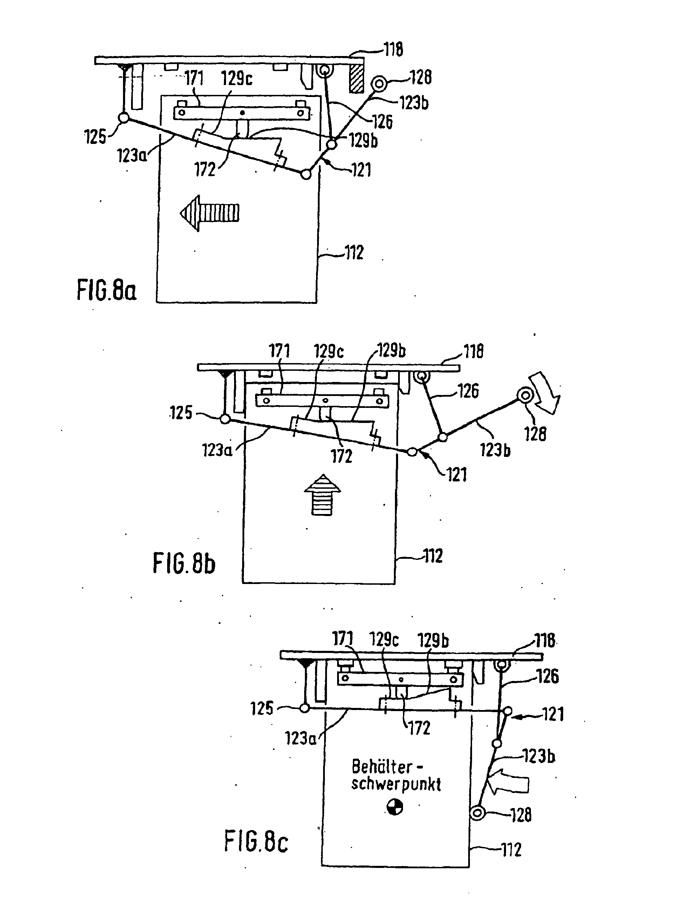

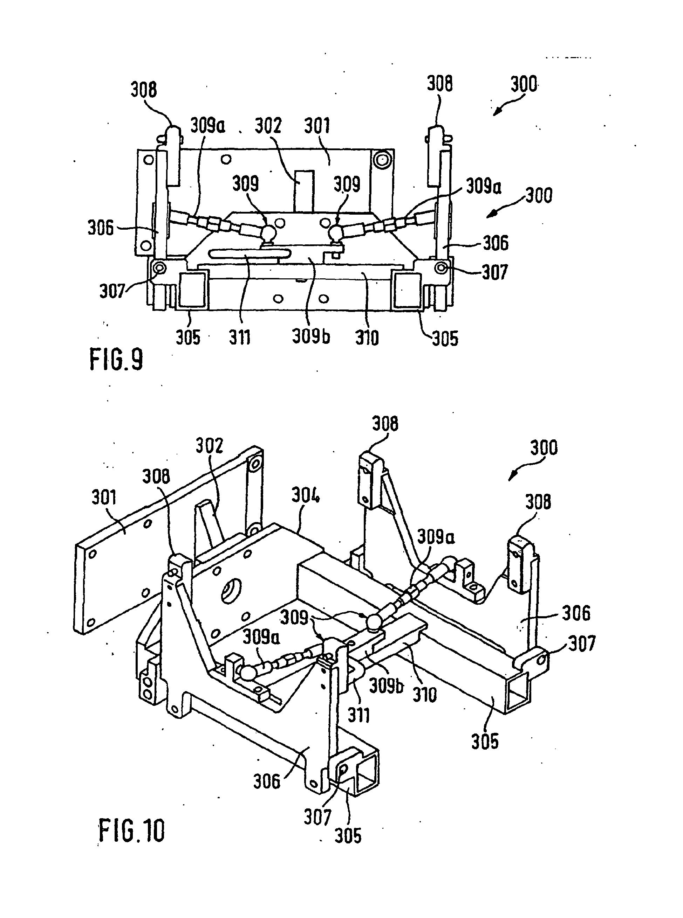

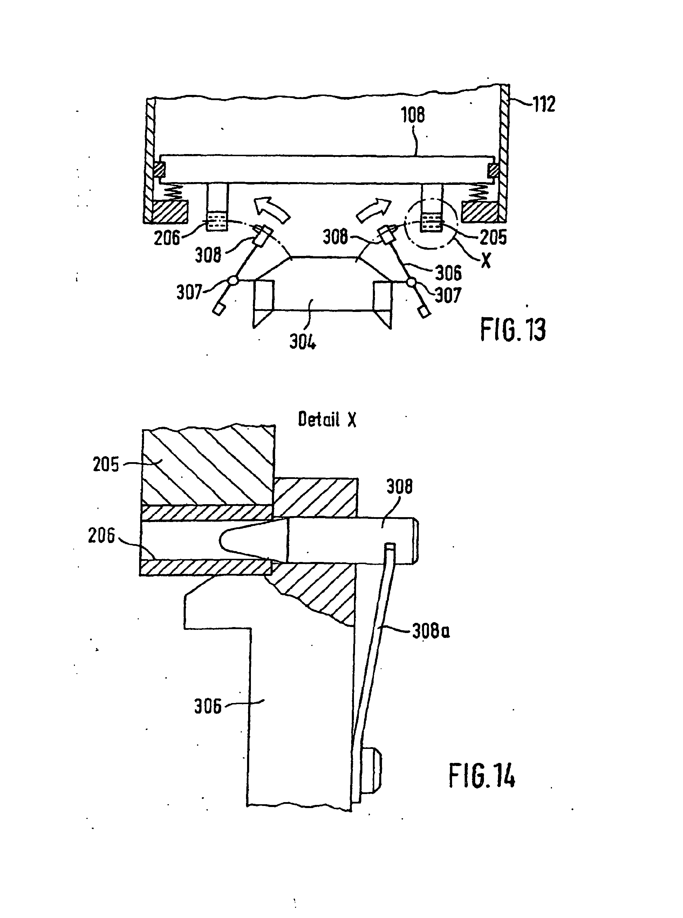

Die Werkstückplattform 108 weist an ihrer Unterseite eine Halterung 205 zum in Eingriff bringen mit einer in den Figuren 9 bis 14 dargestellten Kopplungsvorrichtung eines Tragarms 300 auf. Dazu weist die Halterung 205 an ihrer Unterseite vier in einem Quadrat angeordnete Buchsen 206 auf, die zum Ineingriffbringen mit der Kopplungsvorrichtung vorgesehen sind. Wie aus den Figuren 8 bis 11 ersichtlich ist, weist der Tragarm 300, der die Werkstückplattform 108 im Betrieb stützt, ein mit der Hebevorrichtung im Maschinengehäuse verbundenes und im Betrieb außerhalb des Wechselbehälters angeordnetes Befestigungsteil 301 auf. Von dem Befestigungsteil 301 erstreckt sich im rechten Winkel ein Verbindungsteil 302, welches so bemessen ist, daß es leicht in der Eingriffsausnehmung 133 verschiebbar ist. Im Betrieb erstreckt sich das Verbindungsteil 302 durch die Eingriffsausnehmung 133. Das Verbindungsteil 302 ist mit der Kopplungsvorrichtung des Tragarms verbunden. Die Kopplungsvorrichtung weist zwei an ihrem einen Ende über ein Verbindungsteil 304 miteinander verbundene Streben 305 in Form eines Hohlprofiles auf, an denen jeweils eine mit der Halterung 205 der Werkstückplattform zu verbindende Tragplatte 306 auf einer Schwenkachse 307 schwenkbar angeordnet ist. Die Tragplatten 306 weisen an ihrem oberen Ende Eingriffsteile in Form von beispielsweise über eine Blattfeder 308a (Fig. 14) federnd gelagerten Stiften 308 auf, die so geformt und angeordnet sind, daß sie in die Buchsen 206 der Halterung 205 in angekoppeltem Zustand eingreifen. Der Winkel der Spitze der Stifte 308 ist so flach ausgebildet, daß ein Rücktreiben durch eine vertikale Krafteinwirkung ausgeschlossen ist, wodurch eine Verriegelung erreicht wird. Die Buchsen 206, die Stifte 308 und die Tragplatten 306 sind aus gehärtetem Material, bevorzugt gehärtetem Stahl, gebildet.

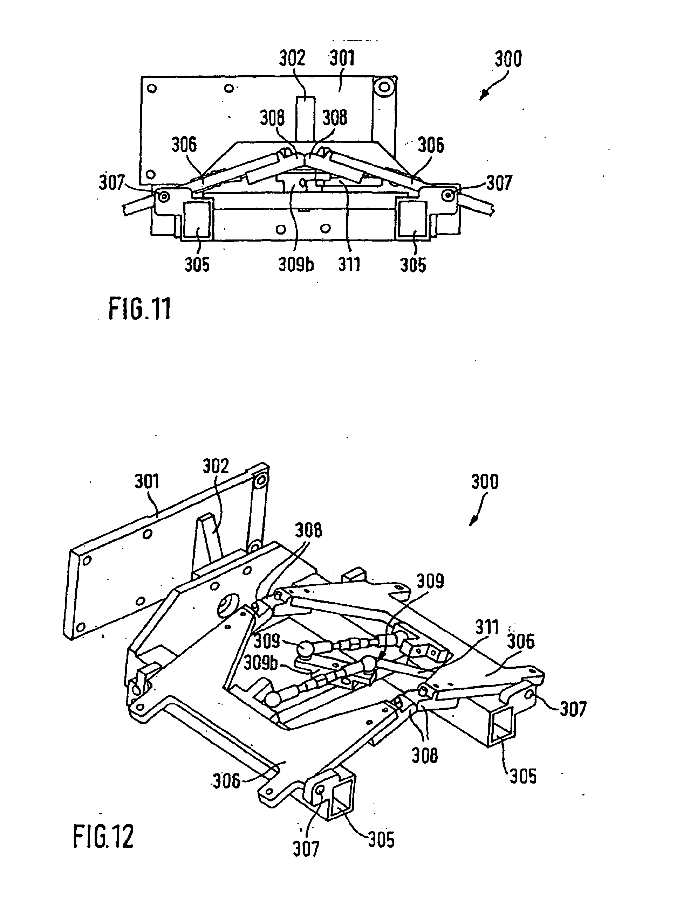

Die Tragplatten 306 sind über einen Schwenkmechanismus von einer ersten Stellung, die in den Figuren 9 und 10 dargestellt ist, und in der die Tragplatten senkrecht stehen und die Stifte 308 im Betrieb in die Buchsen 206 eingreifen und einer in den Figuren 10 und 11 dargestellten zweiten Stellung, in denen die Tragplatten 306 gegeneinander geklappt sind und keine Verbindung zur Werkstückplattform 108 besteht, schwenkbar. Der Schwenkmechanismus besteht aus einem Kniehebelsystem aus zwei Kniehebeln 309 mit jeweils einem ersten Schenkel 309a, der mit seinem einen freien Ende drehbar an der benachbarten Tragplatte 306 angelenkt ist und einem jeweils mit einem der ersten Schenkel 309a an seinen Enden drehbar verbundenen zweiten Schenkel 309b, der für beide Kniehebel gemeinsam vorgesehen ist und der drehbar auf einer die Streben 305 verbindenden Querstrebe 310 gelagert ist. Es ist ferner an dem zweiten Schenkel 309b ein Schwenkhebel 311 angeordnet durch dessen Betätigung das Kniehebelsystem betätigt werden kann. Dazu greift der Schwenkhebel am zweiten Schenkel 309b an, so daß dieser relativ zur Querstrebe 310 gedreht werden kann. Durch Schwenken des Schwenkhebels 311 sind die Kniehebel von ihrem gestreckten Zustand in ihren zusammengefalteten Zustand und umgekehrt bringbar, wodurch die Tragplatten von ihrem aufrechten Zustand in den gegeneinander geklappten Zustand und umgekehrt geschwenkt werden.

Im Betrieb befindet sich zunächst in dem leeren Bauraum 3 die Klemmvorrichtung 121 in der Stellung, in der die Griffstange 128 oben ist, d.h. der Arbeitsplatte 118 zugewandt ist. Der Verbindungspunkt der Schenkel 123a, 123b der Kniehebel befindet sich dabei in einer ersten, unteren Stellung und die Enden der Schenkel 123a, 123b weisen in Richtung der Arbeitsplatte 118. Dann wird ein leerer Wechselbehälter 112 in den Bauraum 3 derart eingesetzt, daß die seitlich abstehenden Trägerwinkel 171 zwischen den in den Figuren 6 und 7 dargestellten ersten Schenkel 123a der Kniehebel 123 und dem Rahmenteil 122 eingeschoben werden. Dabei kommt der Stift 172 mit seinem freien Ende 173 auf dem zweiten Abschnitt 129b des Aufsatzteiles jeweils zu liegen. Dann wird die Griffstange 128, wie in Fig. 8b gezeigt ist, nach unten gedrückt, wobei dann der Wechselbehälter an die Anlage 122b anschlägt. Als Folge der Zentrierbewegung des Wechselbehälters gleitet der Stift 172 auf der schrägen Fläche des zweiten Abschnitts 129b bis er auf der dritten Fläche 129c zu liegen kommt (Fig. 8c). In dieser zweiten, oberen Stellung der Kniehebel ist der erste Schenkel 123a waagerecht ausgerichtet, während der zweite Schenkel 123b nach unten weist, wobei die Endposition der Griffstange 128 durch den Anschlag 128a gegeben ist. Wie in Fig. 8c gezeigt ist, sind die Abmessungen der Klemmvorrichtung so, daß der Behälterschwerpunkt in etwa unterhalb des Auflagepunktes des Stiftes 172 ist. In der in Fig. 8c gezeigten Stellung wird der Wechselbehälter durch im wesentlichen punktweise Einwirkung der Klemmkraft der ersten Schenkel 123a jeweils auf den Stift gegen die Auflagen in den Rahmenteile 122 und somit gegen die Arbeitsplatte 118, die ein Widerlager bildet, geklemmt.

Die Werkstückplattform 108, die sich zu Beginn in ihrer untersten Stellung befindet wird anschließend an den zuvor von unten eingeführten Tragarm 300 angekoppelt, wobei der Schwenkhebel 311 in die in den Fig. 9 und 10 gezeigte Stellung gebracht wird, wodurch die Kniehebel 309 in ihre gestreckte Stellung gebracht werden und damit die Tragplatten 306 in ihre aufrechte Position geschwenkt werden. Dann werden wie in Fig. 13 und 14 gezeigt ist, die Stifte 308 in die Buchsen 206 der Halterung 205 gedrückt, wodurch der Tragarm angekoppelt ist. Die Positionierung erfolgt vertikal durch die Buchsen, die auf dem Teil 306 aufliegen.

Anschließend kann der Aufbau des Objektes in dem Wechselbehälter stattfinden. Hierzu wird die Werkstückplattform mittels Betätigung der Höhenverfahreinrichtung und gestützt von dem Tragarm in ihre oberste Stellung gefahren und eine Schicht eines pulverförmigen Materials aufgetragen und an den dem Objekt entsprechenden Stellen gesintert. Anschließend wird die Werkstückplattform um das einer Schichtdicke entsprechende Maß abgesenkt und neues Pulver aufgetragen.

Durch das Absenken der Werkstückplattform wird gleichzeitig die Eingriffsausnehmung mit dem Stahlband 200 gedichtet, so daß kein Pulver durch die Eingriffsausnehmung 133 nach außen fallen kann. Durch die Führung des Stahlbandes an der Unterseite der Werkstückplattform 108 ist gewährleistet, daß immer der Teil der Eingriffsausnehmung, der sich oberhalb der Werkstückplattform befindet, abgedeckt wird.

Nach Fertigstellen des Objekts wird die Werkstückplattform in die Entnahmeposition (unterste Position der Werkstückplattform) gefahren. Anschließend wird die Werkstückplattform vom Antrieb abgekoppelt, indem der Hebel 311 nach rechts geschwenkt wird, wodurch die Tragplatten 306 in die in Fig. 12 gezeigte Position geschwenkt werden. Durch diesen Vorgang entsteht ausreichend Raum in vertikaler Richtung, um den Wechselbehälter abzusenken. Dieses Absenken erfolgt mit der bereits beschriebenen Hub- und Klemmvorrichtung, indem die Schritte gemäß den Figuren 8a) bis 8c) in umgekehrter Reihenfolge ausgeführt werden. Dann wird der Wechselbehälter zusammen mit dem darin gebildeten Objekt entnommen. Der Wechselbehälter wird anschließend mittels der Haltegriffe 116 an einen Ort zu Weiterbehandlung oder Abkühlung gebracht.. In einer alternativen Ausführungsform wird der Wechselbehälter mittels eines nicht dargestellten Hubwagens, der in den Bauraum hineingefahren bzw. an den Bauraum hingefahren werden kann, herausgeholt. Das hat den Vorteil, daß der Wechselbehälter mit dem darin gebildeten Objekt, der sehr schwer sein kann, nicht von Hand getragen werden muß.

Durch die spezielle Konstruktion der Tragvorrichtung mit der Kopplungseinrichtung ist es möglich, daß der für das Absenken des Wechselbehälters erforderliche Platz nicht durch ein Verfahren der z-Achse geschaffen wird. Dadurch wird es möglich, die maximal mögliche Verfahrstrecke ganz zum Bauen von Objekten zu benutzen.

Die Erfindung ist nicht auf eine Laser-Sintermaschine beschränkt. Sie ist anwendbar auf alle Rapid-Prototyping-Vorrichtungen, bei denen ein Objekt aus einem verfestigbaren Material schichtweise auf einer Bau- bzw. Werkstückplattform aufgebaut wird.

## Patentansprüche

1. Vorrichtung zum Herstellen eines dreidimensionalen Objektes durch aufeinanderfolgendes schichtweises Verfestigen eines verfestigbaren Materials an dem Querschnitt des Objektes entsprechenden Stellen mit einem in einem Maschinengehäuse vorgesehenen Bauraum (3), in dem ein einen Begrenzungsrahmen für das Material (9) darstellender Behälter (12; 112) vorgesehen ist, in dem eine Werkstückplattform (8; 108) integriert ist und in welchem eine Trägervorrichtung (20) angeordnet ist, auf der die Werkstückplattform (8; 108) beim Betrieb der Vorrichtung abgestützt und/oder befestigt ist, wobei der Behälter (12; 112) ein vorgefertigter Wechselbehälter ist, der zusammen mit der den Behälterboden bildenden Werkstückplattform (8; 108) aus dem Bauraum (3) entnehmbar ist, **dadurch gekennzeichnet, daß** die Trägervorrichtung (20) für die Werkstückplattform (8) in Verschieberichtung verlaufende Eingriffsausnehmungen (33) in der hinteren Seitenwandung (14') durchgreift

2. Vorrichtung nach Anspruch 1,
**dadurch gekennzeichnet, daß** die Werkstückplattform in dem Begrenzungsrahmen höhenverfahrbar ist und als Behälterboden in dem Wechselbehälter integriert ist.

3. Vorrichtung nach Anspruch 1 oder 2,
**dadurch gekennzeichnet, daß** die Vorrichtung als Laser-Sintermaschine, insbesondere als Kunststoff-Laser-Sintermaschine ausgebildet ist, wobei der Bauraum (3) in einem Maschinengehäuse untergebracht ist und wobei in dem Bauraum (3) eine Ausgangsoptik (5) eines Sinterlasers sowie darunter die Werkstückplattform (8) angeordnet sind, sowie eine Materialzuführungseinrichtung mit einem Beschichter (10) vorgesehen ist, der zum Zuführen von pulverartigem Sintermaterial (9) aus einem Vorratsbehälter in den Prozeßbereich der Werkstückplattform (8) dient.

4. Vorrichtung nach einem der Ansprüche 1 bis 3,
**dadurch gekennzeichnet, daß** die Werkstückplattform (8) mit den Seitenwandungen (14) des Wechselbehälters (12) in einer unteren Entnahmestellung verrastbar und der Wechselbehälter (12) zusammen mit der seinen Behälterboden bildenden Werkstückplattform (8) in verrastetem Zustand aus dem Bauraum (3) entnehmbar ist und/oder daß die Verrastung zwischen den Seitenwandungen (14) des Wechselbehälters (12) und der Werkstückplattform (8) durch in miteinanderfluchtende Bohrungen einführbare Steckschieber (25) erfolgt.

5. Vorrichtung zum Herstellen eines dreidimensionalen Objektes durch aufeinanderfolgendes schichtweises Verfestigen eines verfestigbaren Materials an dem Querschnitt des Objektes entsprechenden Stellen mit einem in einem Maschinengehäuse vorgesehenen Bauraum (3), in dem ein einen Begrenzungsrahmen für das Material (9) darstellender Behälter (12; 112) vorgesehen ist, in dem eine Werkstückplattform (8; 108) integriert ist und in welchem eine Trägervorrichtung (20) angeordnet ist, auf der die Werkstückplattform (8; 108) beim Betrieb der Vorrichtung abgestützt und/oder befestigt ist, wobei der Behälter (12; 112) ein vorgefertigter Wechselbehälter ist, der zusammen mit der den Behälterboden bildenden Werkstückplattform (8; 108) aus dem Bauraum (3) und aus dem Maschinengehäuse entnehmbar ist,
**dadurch gekennzeichnet, daß** die Trägervorrichtung (40) in den unteren Bereich des Wechselbehälters (12) eingebaut und damit fester Bestandteil des Wechselbehälters (12) ist.

6. Vorrichtung nach einem der vorhergehenden Ansprüche,
**dadurch gekennzeichnet, daß** der Wechselbehälter (12) in Führungen (70) im Bereich der Seitenwandungen (14) des Bauraumes (3) einschiebbar ist.

7. Vorrichtung nach Anspruch 6,
**dadurch gekennzeichnet, daß** der Wechselbehälter (12) an seinem oberen Ende mit seitlich abstehenden Trägerwinkeln (71) versehen ist, die auf den Führungen (70) des Maschinengehäuses (2) aufliegen.

8. Vorrichtung nach einem der Ansprüche 1 bis 4,
**dadurch gekennzeichnet, daß** die Eingriffsausnehmungen (33) im Bereich oberhalb der Werkstückplattform (8) pulverdicht abgedeckt sind.

9. Vorrichtung nach einem der Ansprüche 1 bis 4,
**dadurch gekennzeichnet, daß** die Abdichtung der Eingriffsausnehmungen (33) durch einen Rollo (34) bevorzugt einen Stahlrollo erfolgt.

10. Vorrichtung nach einem der vorhergehenden Ansprüche,
**dadurch gekennzeichnet, daß** zwischen den Innenseiten (15) der Seitenwandungen (14) des Wechselbehälters (12) und den Außenkanten der Werkstückplattform (8) ein Pulverdichtungselement wirksam ist.

11. Vorrichtung nach einem der Ansprüche 1 bis 4,
**dadurch gekennzeichnet, daß** der Wechselbehälter (12; 112) eine Ausnehmung (33; 133) aufweist, durch die die Trägervorrichtung (300; 30) hindurchgreift und in der die Trägervorrichtung verschiebbar ist.

12. Vorrichtung nach Anspruch 11,
**dadurch gekennzeichnet, daß** die Ausnehmung (33; 133) gegen den Bauraum (3) derart abgedichtet ist, daß kein unverfestigtes Material austreten kann.

13. Vorrichtung nach einem der Ansprüche 11 oder 12,
**dadurch gekennzeichnet, daß** die Ausnehmung (133) in Verschieberichtung der Trägervorrichtung schlitzförmig ausgebildet ist und mittels eines Bandes (200) bevorzugt eines Stahlbandes abgedichtet ist, welches oberhalb der Ausnehmung an der Wand des Wechselbehälters befestigt ist und von der Werkstückplattform (108) gegen die die Ausnehmung (133) umgebende Behälterwand gedrückt wird.

14. Vorrichtung nach Anspruch 13,
**dadurch gekennzeichnet, daß** das Band (200) an seinem anderen Ende im Bereich der Unterkante des Wechselbehälters festgeklemmt ist und zwischen den Stellen, in denen es eingeklemmt ist, eine konstante Länge aufweist.

15. Vorrichtung nach Anspruch 13 oder 14,
**dadurch gekennzeichnet, daß** das Band an der Unterseite der Werkstückplattform über wenigstens zwei im Bereich der Kanten der Werkstückplattform angeordnete Gleitführungen (202, 203) gespannt ist.

16. Vorrichtung nach einem der Ansprüche 1 bis 4,
**dadurch gekennzeichnet, daß** die Trägervorrichtung (40) von unten in den Wechselbehälter (12; 112) eingreift und mit einer teleskopierten Linearführung zum Anheben und Absenken der Werkstückplattform verbunden ist.

17. Vorrichtung nach einem der vorhergehenden Ansprüche,
**dadurch gekennzeichnet, daß** in dem Bauraum (3) eine Arbeitsplatte (118) vorgesehen ist, die eine Vorrichtung (121) zum Festklemmen des Wechselbehälters (112) an der Unterseite der Arbeitsplatte (118) aufweist und/oder
daß eine Kopplungsvorrichtung (300) zum An- bzw. Abkoppeln der Trägervorrichtung an die Werkstückplattform (108) vorgesehen ist und/oder
daß in dem Wechselbehälter (12), insbesondere seinen Seitenwandungen (14) und/oder in der Werkstückplattform (8) eine regelbare Heizvorrichtung angeordnet ist und/oder
daß die Trägervorrichtung so ausgebildet ist, daß ein für ein Absenken des Wechselbehälters erforderlicher Platz ohne Verfahren der Trägervorrichtung in vertikaler Richtung geschaffen wird und/ oder
dadurch, daß ein Anheben und Verriegeln des Wechselbehälters in einer einzigen Bewegung und/oder mit einem einzigen Mechanismus erfolgt.

## Claims

1. Device for producing a three-dimensional object by successive layerwise solidification of a solidifiable material at locations corresponding to the cross section of the object, with a construction apace (3) which is provided in a machine housing and in which a container (12; 112) constituting a boundary frame for the material (9) is provided and in which a workpiece platform (8; 108) is integrated and in which a support device (20) is arranged, on which the workpiece platform (8; 108) is supported and/or fastened during operation of the device, wherein the container (12; 112) is a premanufactured interchangeable container which can be removed from the construction space (3) together with the workpiece platform (8; 108), which forms the container floor, **characterized in that** the support device (20) for the workpiece platform (8) reaches.through engagement recesses (33), which run in the direction of displacement, in the rear side wall (14').

2. Device according to Claim 1, **characterized in that** the workpiece platform can be moved vertically in the boundary frame and is integrated in the interchangeable container as the container floor.

3. Device according to Claim 1 or 2, **characterized in that** the device is designed as a laser sintering machine, in particular as a plastics laser sintering machine, the construction space (3) being accommodated in a machine housing and an output optics (5) of a sintering laser and, below it, the workpiece platform (8) being arranged in the construction space (3), and a material-feeding device with a coater (10) being provided, the said coater being used for feeding powder-like sintering material (9) from a storage container into the processing region of the workpiece platform (8).

4. Device according to one of Claims 1 to 3,
**characterized in that** the workpiece platform (8) can be latched by the side walls (14) of the interchangeable container (12) in a lower removal position and, in the latched state, the interchangeable container (12) can be removed together with its workpiece platform (8), which forms its container floor, from the construction space (3), and/or **in that** the latching between the side walls (14) of the interchangeable container (12) and the workpiece platform (8) takes place by means of plug-in slides (25) which can be introduced into aligned holes.

5. Device for producing a three-dimensional object by successive layerwise solidification of a solidifiable material at locations corresponding to the cross section of the object, with a construction space (3) which is provided in a machine housing and in which a container (12; 112) constituting a boundary frame for the material (9) is provided and in which a workpiece platform (8; 108) is integrated and in which a support device (20) is arranged, on which the workpiece platform (8; 108) is supported and/or fastened during operation of the device, wherein the container (12 ; 112) is a premanufactured interchangeable container which can be removed from the construction space (3) and from the machine housing together with the workpiece platform (8; 108), which forms the container floor, **characterized in that** the support device (40) is installed in the lower region of the interchangeable container (12) and is therefore a fixed part of the interchangeable container (12).

6. Device according to one of the preceding claims, **characterized in that** the interchangeable container (12) can be pushed into guides (70) in the region of the side walls (14) of the construction space (3).

7. Device according to Claim 6, **characterized in that** the interchangeable container (12) is provided at its upper end with laterally protruding supporting elbows (71) which rest on the guides (70) of the machine housing (2).

8. Device according to one of Claims 1 to 4,
**characterized in that** the engagement recesses (33) are covered in a powder-tight manner in the region above the workpiece platform (8).

9. Device according to one of Claims 1 to 4,
**characterized in that** the engagement recesses (33) are sealed by a rolling screen (34), preferably a steel rolling screen.

10. Device according to one of the preceding claims, **characterized in that** a powder-compacting element is effective between the inner sides (15) of the side walls (14) of the interchangeable container (12) and the outer edges of the workpiece platform (8).

11. Device according to Claims 1 to 4, **characterized in that** the interchangeable container (12; 112) has a. recess (33; 133) through which the support device (300; 30) reaches and in which the support device can be displaced.

12. Device according to Claim 11, **characterized in that** the recess (33; 133) is sealed towards the construction space (3) in such a manner that no uncompacted material can emerge.

13. Device according to either of Claims 11 and 12, **characterized in that** the recess (133) is of slot-shaped design in the direction of displacement of the support device and is sealed by means of a band (200), preferably a steel band, which is fastened above the recess to the wall of the interchangeable container and is pressed by the workpiece platform (108) against the container wall surrounding the recess (133).

14. Device according to Claim 13, **characterized in that** the band (200) is clamped at its other end in the region of the lower edge of the interchangeable container and has a constant length between the locations in which it is clamped.

15. Device according to Claim 13 or 14, **characterized in that** the band is fixed on the lower side of the workpiece platform via at least two sliding guides (202, 203) arranged in the region of the edges of the workpiece platform.

16. Device according to one of Claims 1 to 4, **characterized in that** the support device (40) engages from below in the interchangeable container (12; 112) and is connected to a telescopic linear guide for raising and lowering the workpiece platform.

17. Device according to one of the preceding claims, **characterized in that** a working plate (118) which has a device (121) for clamping the interchangeable container (112) to the lower side of the working plate (118) is provided in the construction space (3), and/or **in that** a coupling device (300) for coupling the support device to or uncoupling it from the workpiece platform (108) is provided, and/or a controllable heating device is arranged in the interchangeable container (12), in particular in its side walls (14) and/or in the workpiece platform (8), and/or **in that** the support device is designed in such a manner that a space which is required for lowering the interchangeable container is provided in the vertical direction without moving the support device, and/or **in that** raising and locking the interchangeable container takes place in a single movement and/or with a single mechanism.

## Revendications

1. Dispositif pour la fabrication d'un objet tridimensionnel par solidification de couches successives d'un matériau solidifiable en des points correspondant à la section de l'objet, avec un espace de construction (3) prévu dans une enceinte de machine, dans lequel est prévu un contenant (12 ; 112) représentant un cadre de délimitation pour le matériau (9), dans lequel est intégrée une plate-forme à pièce (8, 108) et dans lequel est disposé un mécanisme de support (20) sur lequel la plate-forme à pièce (8, 108) s'appuie et (ou) est fixée pendant le fonctionnement du dispositif, dans lequel le contenant (12 ; 112) est un contenant interchangeable préfabriqué qui peut être retiré de l'espace de construction (3) en même temps que la plate-forme à pièce (8, 108) formant le fond du contenant, **caractérisé en ce que** le mécanisme de support (20) pour la plate-forme à pièce (8) se met en prise dans des ouvertures de prise (33) orientées dans le sens de translation dans la paroi postérieure (14').

2. Dispositif selon la revendication 1, **caractérisé en ce que** la plate-forme à pièce est mobile verticalement dans le cadre de délimitation et est intégrée dans le contenant interchangeable pour en former le fond.

3. Dispositif selon la revendication 1 ou 2, **caractérisé en ce que** le dispositif est conçu comme une machine de frittage par laser en particulier une machine de frittage de plastique par laser, dans laquelle l'espace de construction (3) est installé dans une enceinte de machine et l'espace de construction (3) contient une optique de sortie (5) d'un laser de frittage et la plate-forme à pièce (8) en-dessous de celle-ci, ainsi qu'un dispositif d'introduction de matériau avec un dispositif de formation de couches (10) servant à amener de la matière à fritter (9) en poudre d'un réservoir vers la zone de traitement de la plate-forme à pièce (8).

4. Dispositif selon l'une ou l'ensemble des revendications 1 à 3, **caractérisé en ce que** la plate-forme à pièce (8) peut être emboîtée avec les parois latérales (14) du contenant interchangeable (12) dans une position basse de retrait et le contenant interchangeable (12) peut être retiré de l'espace de construction (3) dans l'état emboîté avec la plate-forme à pièce (8) formant le fond du contenant, et (ou) **en ce que** l'emboîtement entre les parois latérales (14) du contenant interchangeable (12) et la plate-forme à pièce (8) est réalisé par des targettes (25) pouvant être introduites dans des trous alignés les uns sur les autres.

5. Dispositif pour la fabrication d'un objet tridimensionnel par solidification de couches successives d'un matériau solidifiable en des points correspondant à la section de l'objet, avec un espace de construction (3) prévu dans une enceinte de machine, dans lequel est prévu un contenant (12 ; 112) représentant un cadre de délimitation pour le matériau (9), dans lequel est intégrée une plate-forme à pièce (8, 108) et dans lequel est disposé un mécanisme de support (20) sur lequel la plate-forme à pièce (8, 108) s'appuie et (ou) est fixée pendant le fonctionnement du dispositif, dans lequel le contenant (12; 112) est un contenant interchangeable préfabriqué qui peut être retiré de l'espace de construction (3) et de l'enceinte de machine en même temps que la plate-forme à pièce (8, 108) formant le fond du contenant, **caractérisé en ce que** le mécanisme de support (40) est intégré dans la partie inférieure du contenant interchangeable (12) et fait ainsi partie à demeure du contenant interchangeable (12).

6. Dispositif selon l'une ou l'ensemble des revendications précédentes, **caractérisé en ce que** le contenant interchangeable (12) peut être enfilé dans des guides (70) au niveau des parois latérales (14) de l'espace de construction (3).

7. Dispositif selon la revendication 6, **caractérisé en ce que** le contenant interchangeable (12) est pourvu à son extrémité supérieure de cornières de support (71) faisant saillie latéralement, qui reposent sur des guides (70) de l'enceinte de machine (2).

8. Dispositif selon l'une ou l'ensemble des revendications 1 à 4, **caractérisé en ce que** les ouvertures de prise (33) sont fermées de manière étanche à la poudre dans la zone située au-dessus de la plate-forme à pièce (8).

9. Dispositif selon l'une ou l'ensemble des revendications 1 à 4, **caractérisé en ce que** l'étanchéité des ouvertures de prise (33) est réalisée par un rideau déroulant (24), de préférence un rideau déroulant en acier.

10. Dispositif selon l'une ou l'ensemble des revendications précédentes, **caractérisé en ce qu'**un élément d'étanchéité à la poudre agit entre les faces intérieures (15) des parois latérales (14) du contenant interchangeable (12) et les bords extérieurs de la plate-forme à pièce (8).

11. Dispositif selon l'une ou l'ensemble des revendications 1 à 4, **caractérisé en ce que** le contenant interchangeable (12 ; 112) présente une ouverture (33 ; 133) à travers laquelle le mécanisme de support (300 ; 30) se met en prise et dans laquelle le mécanisme de support peut coulisser.

12. Dispositif selon la revendication 11, **caractérisé en ce que** l'ouverture (33 ; 133) est étanche vis-à-vis de l'espace de construction (3) de telle sorte qu'il ne peut pas y avoir d'échappement de matière non solidifiée.

13. Dispositif selon l'une ou l'ensemble des revendications 11 ou 12, **caractérisé en ce que** l'ouverture (133) est conformée en forme de fente dans le sens de translation du mécanisme de support et fermée au moyen d'une bande (200), de préférence une bande d'acier, qui est fixée au-dessus de l'ouverture sur la paroi du contenant interchangeable et pressée par la plate-forme à pièce (108) contre la paroi du contenant entourant l'ouverture (133).

14. Dispositif selon la revendication 13, **caractérisé en ce que** la bande (200) est serrée à son autre extrémité au niveau du bord inférieur du contenant interchangeable et présente une longueur constante entre les points auxquels elle est fixée.

15. Dispositif selon la revendication 13 ou 14, **caractérisé en ce que** la bande est tendue sur la face intérieure de la plate-forme à pièce sur au moins deux guides coulissants (202, 203) disposés au niveau des bords de la plate-forme à pièces.

16. Dispositif selon l'une ou l'ensemble des revendications 1 à 4, **caractérisé en ce que** le mécanisme de support (40) se met en prise par en-dessous dans le contenant interchangeable (12 ; 112) et est assemblé avec un guide linéaire télescopique pour lever et abaisser la plate-forme à pièce.

17. Dispositif selon l'une ou l'ensemble des revendications précédentes, **caractérisé en ce qu'**il est prévu dans l'espace de construction (3) un plateau de travail (118) présentant un dispositif (121) pour le serrage du contenant interchangeable (112) sur la face inférieure du plateau de travail (118) et (ou) **en ce qu'**il est prévu un mécanisme de couplage (300) pour le couplage et le découplage du mécanisme de support sur la plate-forme à pièce (108)
et (ou) **en ce que** dans le contenant interchangeable (12), en particulier dans sa paroi latérale (14) et/ ou dans la plate-forme à pièce (8), un dispositif de chauffage est disposé
et (ou) **en ce que** le mécanisme de support est conçu de telle sorte qu'une place nécessaire pour l'abaissement du contenant interchangeable soit créée sans déplacement du mécanisme de support dans le sens vertical,
et (ou) **en ce que** le levage et le verrouillage du contenant interchangeable sont réalisés en un seul mouvement et (ou) par un seul mécanisme.
